(19) Europäisches Patentamt
European Patent Office
Office européen des brevets

(11) Publication number: 0 112 134 B1

(12) # EUROPEAN PATENT SPECIFICATION

(45) Date of publication of patent specification: 02.08.89

(51) Int. Cl.$^4$: B 01 D 13/04, B 01 D 53/22, C 08 G 63/18

(21) Application number: 83307501.3

(22) Date of filing: 09.12.83

(54) ## Gas-selectively permeable membrane and method of forming said membrane.

(30) Priority: 10.12.82 JP 217182/82
08.01.83 JP 1601/83

(43) Date of publication of application:
27.06.84 Bulletin 84/26

(45) Publication of the grant of the patent:
02.08.89 Bulletin 89/31

(84) Designated Contracting States:
DE FR GB

(56) References cited:
DE-A-2 336 870
DE-A-2 601 960
DE-A-2 626 769
DE-A-2 942 659
DE-A-3 011 917
US-A-3 744 642
US-A-3 767 737
US-A-4 230 463

(73) Proprietor: SUMITOMO ELECTRIC INDUSTRIES LIMITED
No. 15, Kitahama 5-chome Higashi-ku
Osaka-shi Osaka 541 (JP)

(72) Inventor: Yamada, Katsuya c/o Osaka Works of Sumitomo
Electric Industries Ltd. 1-3, Shimaya 1-chome
Konohana-ku Osaka (JP)
Inventor: Okita, Koichi c/o Osaka Works of Sumitomo
Electric Industries Ltd. 1-3, Shimaya 1-chome
Konohana-ku Osaka (JP)

(74) Representative: Carpenter, David et al
MARKS & CLERK Alpha Tower Suffolk Street Queensway
Birmingham B1 1TT (GB)

(56) References cited:
CHEMICAL ABSTRACTS, vol. 89, no. 20, 13th November 1978, page 49, column 2, abstract no. 164627y, Columbus, Ohio, US; K. UENO et al.: "Polyester semipermeable membranes"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of the Invention

The present invention relates to a gas-selectively permeable membrane and a method of forming the membrane. More particularly, the present invention relates to a gas-selectively permeable membrane comprising an asymmetrical pore diameter structure film of an aromatic polyester or a polymer mixture containing said aromatic polyester, or a composite gas-selectively permeable membrane comprising an asymmetrical pore diameter structure film of an aromatic polyester or a polymer mixture containing said aromatic polyester and at least one thin polymer film, particularly a plasma polymerization thin polymer film on the asymmetrical pore diameter structure film, and a method of forming such membranes.

Background of the Invention

In recent years, extensive research has been conducted on the separation and purification of a fluid mixture using a selectively permeable membrane in place of conventional techniques based on a phase change such as distillation and freezing, which require a large amount of energy.

Processes for separation and purification using such a membrane which are presently in practical use on a commercial scale are directed mainly to liquid/liquid separation, such as the production of fresh water from sea water, disposal of waste water from factories, and concentration of foods, and liquid/solid separation. In connection with gas/gas separation, basically no process has yet been put to practical use. The major reasons for this are:

(1) selective permeability or gas selectivity is poor; that is, since no membrane is available which allows a specific gas to pass therethrough but does not essentially allow other gases to pass therethrough, it is necessary to employ a multistage system in which membrane separation is repeatedly applied when a specific gas of high purity is to be produced. Accordingly, large-sized equipment is needed; and

(2) gas permeability is poor; therefore, it is difficult to treat a large amount of a gas mixture. In particular, when gas selectivity is increased, gas permeability tends to drop, whereas when gas permeability is increased, gas selectivity tends to fall. This problem has not yet been satisfactorily overcome.

Typical membrane forming methods which have been employed to prepare a satisfactory membrane include a method in which an asymmetrical pore diameter structure membrane whose active skin layer is reduced in thickness as much as possible is formed by casting a polymer solution, and a method in which a superthin membrane corresponding to the active skin layer is separately prepared and provided on a porous support to form a composite membrane. These methods to improve gas permeability are not always suitable for practical use because commercially available polymers fail to satisfy all desired physical properties; that is, commercially available polymers or copolymers are satisfactory in at least one of selective permeability, permeability, heat resistance, chemical resistance, strength, and so forth, but are not satisfactory in other properties.

Chemical Abstracts *89,* Abstract No. 1646274 (and JP—A—7866880) disclose an oxygen permeable membrane made of an aromatic polyester obtained from (a) terephthalic acid, isophthalic acid or a mixture thereof and (b) bisphenols or derivatives thereof, which may be applied in solution to a plate, coagulated and then dried.

It has, therefore, been desired to develop polymers which are of high heat resistance and can be produced inexpensively. A typical example of such a polymer is a polysulfone. This polysulfone, however, is not satisfactory in respect of production cost.

Summary of the Invention

The present invention relates to:

a gas-selectively permeable membrane which is an asymmetrical pore diameter structure film made of an aromatic polyester having the recurring unit represented by formula (A) as described hereinafter, or a mixture of the aromatic polyester and at least one polymer having the recurring unit represented by formula (B) as described hereinafter, wherein the mean pore diameter of a dense layer of the asymmetrical pore diameter structure film is 0.5 micrometre or less and the mean thickness of the dense layer is 10 micrometres or less; and

a composite gas-selectively permeable membrane comprising the asymmetrical pore diameter structure film as described above and at least one thin polymer film provided on the dense layer of the asymmetrical pore diameter structure film; and

a method of forming the gas-selectively permeable membrane as described above which comprises applying a solution containing the aromatic polyester having the recurring unit represented by formula (A) as described hereinafter, or a mixture of the aromatic polyester and at least one polymer having the recurring unit represented by formula (B) as described hereinafter, a solvent, and if desired or necessary, a swelling agent to form a film, bringing the thus-formed film into contact with a coagulating agent to remove the solvent, and then drying; and

a method of forming the composite gas-selectively permeable membrane as described above which comprises further providing the thin polymer film on the gas-selectively permeable membrane.

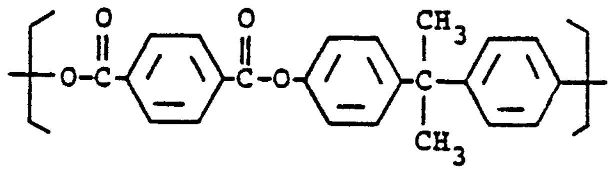

(A)

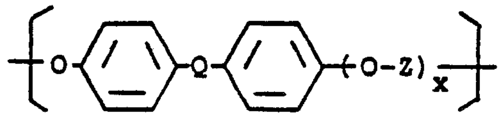

(B)

Brief Description of the Drawings

Figure 1-a is a scanning electron microscopic photograph of the cross section of an asymmetrical pore diameter structure film made of a 4:1 (weight ratio, hereinafter the same) mixture of polysulfone and aromatic polyester (400 magnification).

Figure 1-b is a scanning electron microscopic photograph of the cross section of an asymmetrical pore diameter structure film made of a 1:1 mixture of polysulfone and aromatic polyester (400 magnification);

Figure 1-c is a scanning electron microscopic photograph of the cross section of an asymmetrical pore diameter structure film made of a 1:4 mixture of polysulfone and aromatic polyester (400 magnification).

Figure 2 is a scanning electron microscopic photograph of the cross section of an asymmetrical pore diameter structure film made of a 4:1 mixture of polycarbonate and aromatic polyester (400 magnification); and

Figure 4 is a scanning electron microscopic photograph of the cross section of an asymmetrical pore diamter structure film made of aromatic polyester (1,000 magnification).

In all the photographs, the upper portion is a dense layer.

Detailed Description of the Invention

The asymmetrical pore diameter structure films are disclosed in, for example, S. Loeb, S. Sourirajan, *Advan. Chem. Ser., 33,* 117 (1963) and U.S. Patent 3,775,308. These films comprise a dense layer and a non-dense (porous) layer.

As stated above, polysulfones typically have the defects that gas permeability is poor, although they are superior in heat resistance, chemical resistance, strength, and so forth.

In order to overcome the foregoing problem, in the present invention, the asymmetrical pore diameter structure film is formed using an aromatic polyester or polymer mixture containing the aromatic polyester in place of polysulfone.

That is, one of the features of the present invention is to use as a raw material for the asymmetrical pore diameter structure film an aromatic polyester, or a polymer mixture containing said aromatic polyester, which is different from polysulfone, is inexpensive and has high heat resistance.

The aromatic polyesters used herein are polymers having the recurring unit reoresented by formula (A):

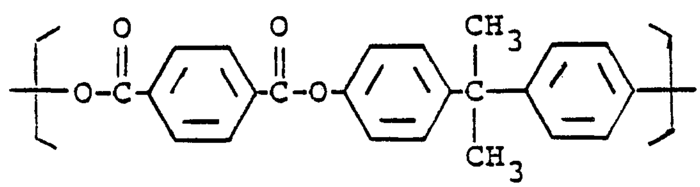

(A)

The aromatic polyesters exclude those polymers containing a non-aromatic component, such as Tetron (Registered Trade Mark). In the case of polyesters containing a non-aromatic component, such as ethylene glycol, problems arise particularly in respect of heat resistance.

The aromatic polyesters used in the present invention have a molecular weight of 10,000 to 50,000, and preferably 25,000 to 40,000.

Since the aromatic polyesters are synthesized from aromatic dicarboxylic acids and divalent phenols various other polymers having a similar recurring unit can be derived, and such various polymers can be used in the present invention.

The polymers mixed with the aromatic polyesters have the recurring unit represented by formula (B):

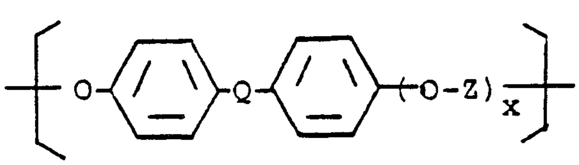

(B)

wherein x is a natural number including zero (0), and Q is

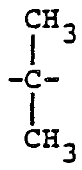 or 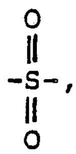, and Z is 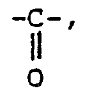, 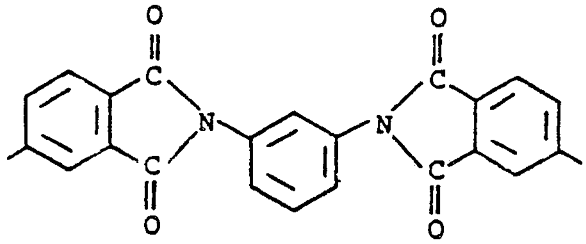,

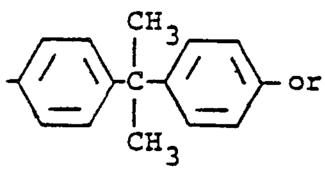 or 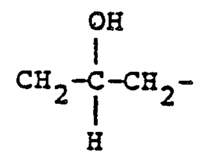

The above polymers have a molecular weight of 10,000 to 50,000. Typical examples of such polymers are as follows:

Polycarbonates having the recurring unit represented by the formula:

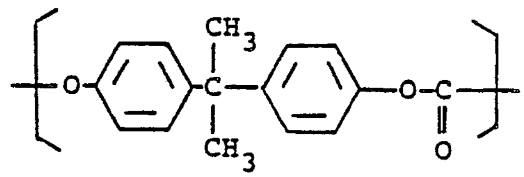

Polyetherimides having the recurring unit represented by the formula:

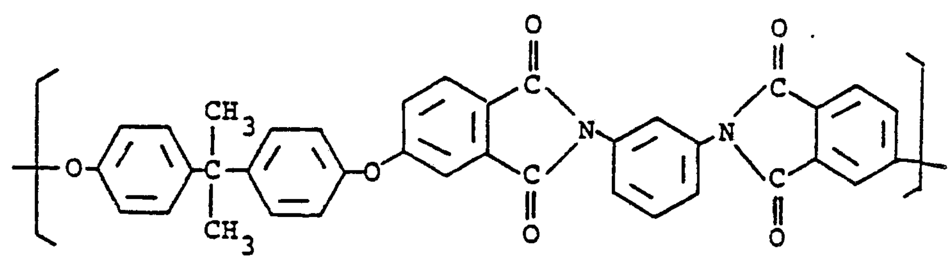

Polysulfones having the recurring unit represented by the formula:

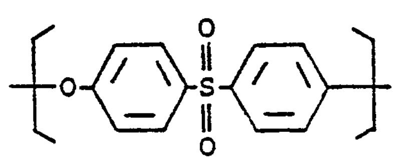 or 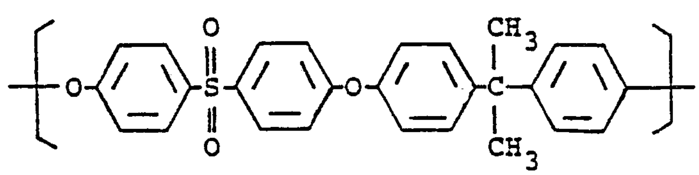

The aromatic polyester or the polymer mixture containing the aromatic polyester can be dissolved in chlorine-based solvents, such as chloroform and trichloroethylene, cyclic ether solvents, such as tetrahydroguran and dioxane, amide solvents, such as dimethylformamide, or nitrogen-containing cyclic solvents, such as N-methyl-2-pyrrolidone, N-formylpiperidine, and l-formylmorpholine. Of these solvents, the chlorine-based solvents and cyclic ether solvents can dissolve the aromatic polyester or the polymer mixture therein easily up to a concentration of 10% by weight based on the resulting solution, but if the concentration exceeds 15% by weight, same basis, many of the resulting solutions tend to become viscous rapidly. On the other hand, the amide solvents and nitrogen-containing cyclic solvents exhibit a high ability to dissolve therein the aromatic polyester or the polymer mixture; that is, the aromatic polyester or the polymer mixture is soluble even up to a concentration of 20 to 30% by weight, same basis, without causing problems such as a serious increase in viscosity, excessive phase separation, and precipitation. Thus, of the solvents as described above, the amide and nitrogen-containing cyclic solvents are particularly preferred. The polymer concentration in the solvent is about 5 to 40% by weight, and preferably 15 to 35% by weight.

The above-described solvents can be used individually or in combination with one another. When a mixture of a solvent having a relatively high boiling point (e.g., dimethylformamide) with a solvent having a

relatively low boiling point (e.g., tetrahydrofuran and dichloromethane) is used, a mean pore diameter of a dense layer obtained can be reduced or a mean thickness of the dense layer can be increased.

It is also possible to add to the above-described solvent or solvent mixture an inorganic or organic swelling agent. Examples of inorganic swelling agent include halides, nitrates and sulfates of alkali metals or alkaline earth metals, such as lithium chloride, potassium chloride, potassium bromide, lithium nitrate and magnesium sulfate. They are used in an amount of 200 parts by weight or less, and preferably 150 parts by weight or less for 100 parts by weight of the aromatic polyester or the polymer mixture containing the aromatic polyester.

Examples of the organic swelling agent include ethylene glycol, diethylene glycol, polyethylene glycol and methyl ether derivatives thereof, polypropylene glycol and derivatives thereof, and polyhydric alcohol such as glycerin and 1,1-propanediol. They are used in the same amount or somewhat larger amount as the inorganic swelling agents described above. By the addition of the swelling agent a mean pore diameter of a dense layer obtained can be increased or a mean thickness of the dense layer can be reduced. Further, when a non-dense (porous) layer obtained has a relatively small pore diameter, the diameter can be increased by the addition of the swelling agent.

The thus-prepared solution is uniformly flowed onto a support plate by means of a doctor knife and then gelled by dipping in a non-solvent, that is, a coagulating agent, usually water, or gelled after partial evaporation of the solvent in the solution to form an asymmetrical pore diameter structure film of the aromatic polyester or the polymer mixture containing the aromatic polyester. Of course, a tubular member can be formed using a tubular nozzle.

The structure and characteristics of the asymmetrical pore diameter structure film are influenced by the type of the polymer, the mixing ratio of the polymer mixture, the concentration of the solution, the type of the solvent, the amount of the additive, and so forth. In general, as the concentration is increased, gas selective permeability increases, but gas permeability drops. As the mixing ratio of the polymer to the aromatic polyester approaches 1:1 (weight ratio, hereinafter the same), the mean pore diameter increases and the gas permeability increases, but the gas selective permeability drops.

These effects will hereinafter be explained with reference to the accompanying photographs.

Figure 1-a is a scanning electron microscopic photograph of the cross section of an asymmetrical pore diameter structure film made of a 1:4 mixture of aromatic polyester and polysulfone.

Figure 2 is a scanning electron microscopic photograph of the cross section of an asymmetrical pore diameter structure film made of a 1:4 mixture of aromatic polyester and polycarbonate.

In the asymmetrical pore diameter structure film of Figure 1-a, inner pores extend to the bottom surface vertically relative to the surface of the film and are oriented in a regular pattern as compared with those in Figure 2. Furthermore, the sponge structure of the walls partitioning the inner pores is denser than that of Figure 2.

This difference is due to a difference in the solubility parameter between the polysulfone and polycarbonate. A difference in compatibility between polysulfone/aromatic polyester and polycarbonate/aromatic polyester results in the difference in the asymmetrical pore diameter film structure. Hence, by using polymers having different compatibilities, it is possible to change the asymmetrical pore diameter film structure, the mean pore diameter and gas permeability. The use of combination of polymers having good compatibility to each other can provide a regularly disposed asymmetrical structure.

Figure 1-b is a scanning electron microscopic photograph of the cross section of an asymmetrical pore diameter structure film made of a 1:1 mixture of aromatic polyester and polysulfone, and Figure 1-c is a scanning electron microscopic photograph of the cross section of an asymmetrical pore diameter structure film made of a 4:1 mixture of aromatic polyester and polysulfone.

The structures shown in Figures 1-a and 1-c are nearly equal. In Figure 1-b, however, there cannot be found regularly oriented longitudinal pores which can be observed in Figures 1-a and 1-c, and the structure is a sponge-like structure having a large mean pore diameter. At a mixing ratio at which the contact interface between different polymers increases, that is, generally a mixing ratio approaching 1:1, the reduction in compatibility between the different polymers reaches a maximum. The characteristics of such a dope solution are responsible for the distortion of the structure in the asymmetrical pore diameter structure film, an increase in the mean pore diameter and irregularity of the surface dense layer. This demonstrates that the structure of the asymmetrical pore diameter structure film, the mean pore diameter and gas permeability can be changed by controlling the mixing ratio of the polymers.

Another feature of the present invention is that on the surface of the dense layer side of the asymmetrical pore diameter structure film described above a thin polymer film of high gas permeability is laminated or a plasma polymerization thin film is deposited by glow discharge to obtain the composite film having a further improved gas permeability.

This feature is preferably applied to the asymmetrical pore diameter structure film having a relatively low gas selective permeability.

When the mean pore diameter of the dense layer is 0.001 micrometre or less, the original gas selective permeability is exhibited, but when it exceeds 0.01 micrometre, the selective permeability is relatively low.

Within this pore diameter range, selective permeability can be recovered by laminating a thin film through, e.g., dipping in a different polymer solution or direct plasma polymerization.

When the mean pore diameter of the dense layer is within the range of from 0.1 to 0.5 micrometre, it is

preferred to slightly increase the thickness of the asymmetrical pore diameter structure film by increasing the thickness of the coated polymer layer and the concentration of the polymer. When, however, the mean pore diameter exceeds 0.5 micrometre, it becomes difficult to form a polymer film having high gas selective permeability.

The thickness of the thin polymer film formed by lamination is about 50 micrometre or less, and preferably about 30 micrometres, or less, however, the thickness can be further reduced within a range such that the pores in the dense layer can be closed or plugged by the lamination. The thickness of the thin polymer film formed by plasma polymerization is about 1 micrometre or less, and preferably about 0.3 micrometre or less.

A thin film of a rubber-based polymer such as polysiloxane is preferably laminated on the asymmetrical pore diameter structure film. In order to prepare a composite membrane of high selectivity, preferably a plasma polymerization thin film is deposited on the asymmetrical pore diameter structure film directly or after the lamination of the rubber-based polymer thin fiilm. High permeability can be maintained by depositing a super thin polymer film of 1 micrometre or less and, furthermore, as a raw material for use in polymerization, a compound of high gas selective permeability can be chosen from a wide range.

In this feature of the present invention, the mean pore diameter of the dense layer is adjusted within a range such that the pores can be closed or pluged by the formation and deposition of the plasma polymerization film. If the mean pore diameter of the dense layer is more than 0.1 micrometre, the pores cannot be plugged by the plasma polymerisation film. On the other hand, if the mean pore diameter is 0.001 micrometre or less, the pores can be easily plugged, but gas permeability seriously drops. As a matter of course, the mean pore diameter which can be plugged by the plasma polymerization film varies slightly depending on the type of the monomer and the plasma polymerization conditions. In the present invention, the mean pore diameter of the dense layer is 0.5 micrometre or less, however, in this feature of the present invention it is generally preferred that the mean pore diameter is in the range between 0.01 and 0.1 micrometre.

Monomers for use in the plasma polymerization will hereinafter be explained.

It is known that various monomers such as ethylene and acetylene undergo plasma polymerization in an atmosphere in which a glow discharge is applied. In the present invention, it is preferred to use compounds having a tertiary carbon-containing group

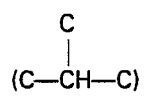

as a functional group and organosilane compounds. Examples of such tertiary carbon-containing compounds include tert-butyl compounds such as tert-butylamine, pentene derivatives such as 4-methyl-1-pentene, octenes such as 1-octene and isoprene.

Organosilane compounds which can be used include tetramethylsilane, hexamethylsilane, methyldichlorosilane, and methyltrichlorosilane. More preferred are organosilane compounds containing an unsaturated bond, such as trimethylvinylsilane, dimethylvinylchlorosilane, vinyltrichlorosilane, methylvinyldichlorosilane, methyltrivinylsilane, allyltrimethylsilane, and ethynyltrimethylsilane.

A gas-selectively permeable membrane is preferably prepared by depositing a plasma polymerization thin film directly on the dense layer of an asymmetrical pore diameter structure film of the aromatic polyester or the polymer mixture containing the aromatic polyester, having a pore diameter range of from 0.001 to 0.1 micrometre. It is required for the raw material for use in the preparation of the film to have superior characteristics. It is further necessary that the constituent controlling the permeability should be reduced to the lowest possible thickness. The reason for this is as follows:

The characteristics of the raw material are evaluated by the gas permeation coefficient thereof:

$$P=cm^3\cdot cm/cm^2\cdot sec\cdot cm\ Hg$$

which is calculated with the thickness of the raw material as 1 cm. On the other hand, the characteristics of the composite membrane is evaluated by the permeation rate per the thickness of the raw material itself:

$$Q=cm^3/cm^2\cdot sec\cdot cm\ Hg$$
$$(1\ cm\ Hg\equiv 1.333\ kPa)$$

Hence, the permeation rate of a 1 micrometre thick membrane is ten times that of a 10 micrometre thick membrane although their permeation coefficients are the same. Hence, the characteristics required actually are the permeation rate and the thickness of the membrane.

In the present invention, the asymmetrical pore diameter structure film made of the aromatic polyester, or the polymer mixture containing the aromatic polyester and further a second polymer, having a pore diameter range as described above is dried and, thereafter, a plasma polymerization layer is deposited on the surface of the dense layer in a thickness of 1 micron or less, preferably 0.3 micrometre or less. For example, the pressure of the plasma polymerization chamber is lowered to 5 torr (0.667 Pa) or less,

preferably 2 torr (0.267 Pa) or less, a mixed gas of an unpolymerizable gas and a polymerizable gas is introduced into the chamber, and when a high frequency glow discharge is applied as a predetermined output of, e.g., from 5 to 500 W, preferably about 20 W, the polymerizable gas undergoes plasma polymerization, depositing as a thin film on the surface of the dense layer of the asymmetrical pore diameter structure film. The thickness of the thin film increases nearly in proportion to the time of glow discharge or the flow rate of the polymerizable gas and, therefore, it can be adjusted to an appropriate value. Furthermore, as the output of glow discharge is increased or decreased, the thickness of the deposited film increases or decreases. These film-forming conditions can be easily optimized by one skilled in the art. In any case, it is necesary in the present invention that a defect-free uniform polymerization film be deposited at a thickness as described above.

One of the criteria in selecting the polymerizable gas is that the plasma polymerization thin film prepared therefore prevents as much as possible the passage of one component of a mixed gas to be separated since the thickness of the plasma polymerization thin film is as low as 1 micrometre and preferably 0.3 micrometre or less. Plasma polymerizable monomers commonly used, such as ethylene and styrene, satisfy the criterion as described above. However, compounds containing a tertiary carbon as a functional group as described above are preferred for use in the present invention. More preferred are those compounds further containing a double bond. In addition, the organosilane compounds as described above are preferred for use in the present invention. Of these organosilane compounds, compounds containing an unsaturated functional group such as a double bond or triple bond are more preferred.

Plasma polymerization techniques which can be utilized in the present invention are disclosed in detail in U.S. Patent 3,847,652.

In using an asymmetrical pore diameter structure film made of an aromatic polyester or a polymer mixture containing said aromatic polyester and having a mean pore diameter of 0.1 micrometre or more, it is preferred to deposit thereon a thin film of a polymer having high gas permeability. Silicone rubbers such as polydimethyl siloxane are preferred from the viewpoint of gas permeability and heat resistance. In particular, RTV-type and LTV-type silicone rubbers, both being low temperature vulcanization type and of the two-pack reaction type, are convenient for use in impregnation into the interior of fine pores in the asymmetrical pore diameter structure film or in reactions after the impregnation since they become polymeric compounds undergoing the condensation and addition reactions described below.

$$\equiv Si{-}OH + RO{-}Si\equiv \rightarrow \equiv Si{-}O{-}Si\equiv + ROH \qquad (1)$$

$$\equiv Si{-}OH + HO{-}Si\equiv \rightarrow \equiv Si{-}O{-}Si\equiv + H_2O \qquad (2)$$

$$\equiv Si{-}CH{=}CH_2 + H{-}Si\equiv \rightarrow \equiv Si{-}CH_2{-}CH_2{-}Si\equiv \qquad (3)$$

They are also convenient in that before the reaction they can be converted into a low viscosity solution with which the pores of the asymmetrical pore diameter structure film of the present invention can be easily impregnated.

As one technique to increase gas selective permeability, a plasma polymerization thin film can further be deposited on the composite material having a silicone rubber laminated thereto. Another technique is that where a plasma polymerization thin film is deposited on the asymmetrical pore diameter structure film of the aromatic polyester or the polymer mixture containing the aromatic polyester, and then the silicone rubber is laminated on the plasma polymerization thin film.

The present invention is described in greater detail by reference to the following Examples. (In the following description ® indicates Registered Trade Mark.)

## Example 1

A dope solution was prepared, consisting of 5% by weight of an aromatic polyester, U Polymer® (U—100, produced by Unitika Co., Ltd.), and 95% by weight of trichloroethylene.

U Polymer® (U—100) has the recurring unit shown below and has a molecular weight of about 28,000.

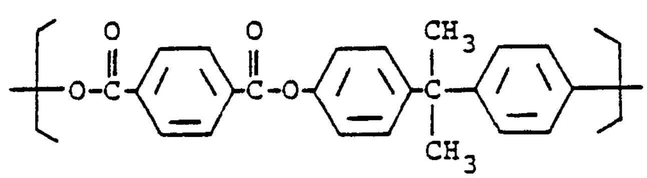

This dope solution was flowed over a smooth glass plate in a thickness of 150 micrometres by means of a doctor knife. The entire glass plate was soaked in ethanol at room temperature to coagulate the dope solution. The film thus-formed was peeled off, wash with water for 2 hours, and dried by blowing air at 45°C for 2 hours to prepare a 10 micrometre thick asymmetrical pore diameter structure film.

After observation of the cross section of the film obtained using a scanning electron microscope (SEM), it was confirmed that the film had an asymmetrical pore diameter structure.

The gas permeation characteristics of the film were measured using air as a feed gas. The oxygen permeation rate $QO_2$ was about $9.6 \times 10^{-7}$ $cm^3/cm^2 \cdot sec \cdot cm$ Hg, and the oxygen/nitrogen selectivity (oxygen permeation rate/nitrogen permeation rate) α was about 5.0.

The oxygen permeation rate per centimeter of thickness, i.e., the oxygen permeation coefficient, $PO_2$ (calculated from $QO_2$) was about $9.6 \times 10^{-10}$ $cm^3 \cdot cm/cm^2 \cdot sec \cdot cm$ Hg.

Example 2

A dope solution was prepared, consisting of 20% by weight of U Polymer® (U—100) and 80% by weight of dimethylformamide (DMF).

This dope solution was flowed over a smooth glass plate in a thickness of 300 micrometres by means of a doctor knife. The entire glass plate was soaked in distilled water at room temperature to coagulate the dope solution. The film thus-formed was peeled off, wash with water for 2 hours, and dried by blowing air at 45°C for 2 hours to prepare about a 120 micrometre thick asymmetrical pore diameter structure film.

After observation of the cross section of the film obtained using SEM, it was confirmed that the film had an asymmetrical pore diameter structure.

The gas permeation characteristics of the film were measured in the same manner as in Example 1 (in the following examples, the same) and the results were as follows:

$$QO_2 \doteqdot 0.4\text{—}1.0 \times 10^{-2}\ cm^3/cm^2 \cdot sec \cdot cm\ Hg$$

$$PO_2 \doteqdot 0.5\text{—}1.2 \times 10^{-4}\ cm^3 \cdot cm/cm^2 \cdot sec \cdot cm\ Hg$$

Comparative Example 1

The gas permeation characteristics of a commercially available polyester film (Mylar®) were measured. The results were as follows:

$$PO_2 \doteqdot 2.4 \times 10^{-12}\ cm^3 \cdot cm/cm^2 \cdot sec \cdot cm\ Hg$$

$$\alpha \doteqdot 4.5$$

Example 3

A dope solution was prepared consisting of 12% by weight of U Polymer® (U—100), 3% by weight of Upilon S—2000 (polycarbonate, produced by Mitsubishi Gas Chemical Co., Ltd.), 64% by weight of N-methyl-2-pyrrolidone, and 21% by weight of tetrahydrofuran (THF).

Upilon S—2000® has the recurring unit shown below and has a molecular weight of about 32,000.

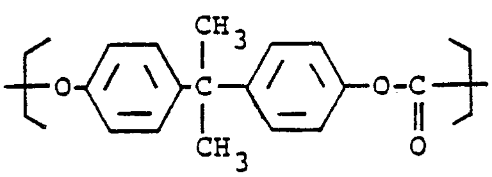

This dope solution was flowed over a smooth glass plate in a thickness of 300 micrometres by means of a doctor knife and was allowed to stand for 2 minutes. At the end of the time, the entire glass plate was soaked in distilled water at room temperature to coagulate the dope solution. The film thus formed was peeled off, washed with water for 2 hours, and dried by blowing air at 45°C for 2 hours to prepare about a 120 micrometres thick asymmetrical pore diameter structure film.

After observation of the cross section of the film obtained using SEM, it was confirmed that the film had an asymmetrical pore diameter structure.

The gas permeation characteristics of the film were as follows:

$$QO_2 \doteqdot 4.3 \times 10^{-6}\ cm^3/cm^2 \cdot sec \cdot cm\ Hg$$

$$PO_2 \doteqdot 1.3 \times 10^{-7}\ cm^3 \cdot cm/cm^2 \cdot sec \cdot cm\ Hg$$

$$\alpha \doteqdot 2.8$$

Examples 4 to 6

Asymmetrical pore diameter structure films were prepared in the same manner as in Example 3 except that dope solutions having the compositions as indicated in Table 1 were used.

The thickness and gas permeation characteristics of each film are shown in Table 2.

Comparative Example 2

A dope solution was prepared consisting of 20% by weight of polysulfone (Udel P1700®, produced by U.C.C.) and 80% by weight of N-methyl-2-pyrrolidone.

Udel P1700® has the recurring unit shown below and has a molecular weight of 28,000.

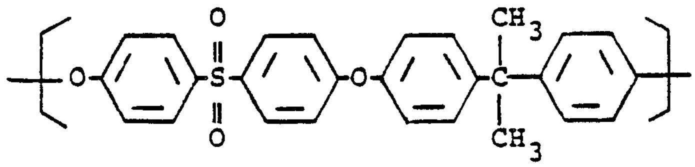

This dope solution was flowed over a smooth glass plate in a thickness of 150 micrometres by means of a doctor knife and dried in an air atmosphere maintained at 250°C for 2 hours to prepare about a 15 micrometres thick dense film. The specific gravity of the film was 1.24. The gas permeation characteristics of the film were as follows:

$QO_2 \doteqdot 9.1 \times 10^{-7}$ cm³/cm²·sec·cm Hg

$\alpha \doteqdot 6.0$

$PO_2 \doteqdot 2.1 \times 10^{-10}$ cm³·cm/cm²·sec·cm Hg

Comparative Examples 3 and 4

Dense films were prepared in the same manner as in Comparative Example 2 except that dope solutions having the compositions as shown in Table 3 were used. The thickness, specific gravity and gas permeation characteristics of each film are shown in Table 4.

Example 7

A dope solution was prepared consisting of 20% by weight of U Polymer® (U—100), 40% by weight of DMF and 40% by weight of THF. Thereafter, in the same manner as in Example 2 except that the dope solution as prepared above was used, about a 170 micrometre thick asymmetrical pore diameter structure film was prepared.

The gas permeation characteristics of the film were as follows:

$QO_2 \doteqdot 2.0 \times 10^{-3}$ cm³/cm²·sec·cm Hg

$PO_2 \doteqdot 3.4 \times 10^{-5}$ cm³·cm/cm²·sec·cm Hg

Silicone rubber (an equimolar mixture of vinyl siloxane having a viscosity of about 7,000 poise and hydrogen siloxane having a viscosity of about 7,000 poise) was deposited on the asymmetrical pore diameter structure film by coating a solution consisting of 10% by weight of the silicone rubber and 90% by weight of Freon® 113 (trifluorotrichloroethane produced by Daikin Kogyo Co., Ltd.) in a thickness of 150 micrometres and vulcanized by blowing hot air at 170°C for 30 minutes to prepare a composite membrane. The gas permeation characteristics of the composite membrane were as follows:

$QO_2 \doteqdot 1.8 \times 10^{-4}$ cm³/cm²·sec·cm Hg

$\alpha \doteqdot 2.6$

Example 8

An asymmetrical pore diameter structure film was prepared in the same manner as in Example 4. A solution consisting of 20% by weight of the same silicone rubber as used in Example 7 ($\alpha \doteqdot 2$) and 80% by weight of Freon® 113 (trifluorotrichloroethane produced by Daikin Kogyo Co., Ltd.) was coated on the asymmetrical pore diameter structure film in a thickness of 150 micrometres and vulcanized by blowing hot air at 170°C for 30 minutes to prepare a composite membrane. The gas permeation characteristics of the composite membrane were as follows:

$QO_2 \doteqdot 9.8 \times 10^{-6}$ cm³/cm²·sec·cm Hg

$\alpha \doteqdot 2.7$

Example 9

A composite membrane was prepared in the same manner as in Example 8 except that the asymmetrical pore diameter structure film formed in the same manner as in Example 5 was used. The gas permeation characteristics of the composite membrane were as follows:

$QO_2 \doteqdot 1.7 \times 10^{-5}$ cm³/cm²·sec·cm Hg

$\alpha \doteqdot 2.4$

Example 10

A composite membrane was prepared in the same manner as in Example 8 and placed in a reaction chamber. While introducing trimethylvinylsilane at a flow rate of 0.7 cm³/min, a glow discharge was

applied in the chamber at an output of 20W for 30 minutes to deposit a plasma polymerization film on the outermost layer of the composite membrane. In this way, a three-layer composite membrane was prepared. The gas permeation characteristics of the three-layer composite membrane were as follows:

$QO_2 \doteqdot 3.1 \times 10^{-6}$ cm³/cm²·sec·cm Hg

$\alpha \doteqdot 3.9$

Example 11

A dope solution was prepared consisting of 20% by weight of U Polymer® (U—100) and 80% by weight of N-methyl-2-pyrrolidone. About a 170 micrometre thick asymmetrical pore diameter structure film was prepared in the same manner as in Example 2 except that the dope solution as prepared above was used. The gas permeation characteristics of the film were as follows:

$QO_2 \doteqdot 5.7 \times 10^{-5}$ cm³/cm²·sec·cm Hg

$PO_2 \doteqdot 9.7 \times 10^{-7}$ cm³·cm/cm²·sec·cm Hg

The cross section of the film was observed by the use of SEM and was found to have an asymmetrical pore diameter structure as shown in Figure 3.

A 17 cm² piece of the asymmetrical pore diameter structure film was placed on a filter paper. Then, 10 g of a solution consisting of 0.01% by weight of the silicone rubber ($\alpha \doteqdot 2.0$) which is the same as used in Example 7 and 99.9% by weight of Freon® 113 was suction filtered and vulcanized with hot air at 120°C for 40 minutes to prepare a composite membrane.

The gas permeation characteristics of the composite membrane were as follows:

$QO_2 \doteqdot 8.4 \times 10^{-6}$ cm³/cm²·sec·cm Hg

$\alpha \doteqdot 2.7$

Example 12

An asymmetrical pore diameter structure film was prepared in the same manner as in Example 11. A solution consisting of 20% by weight of the silicone rubber ($\alpha \doteqdot 2$) which is the same as used in Example 7 and 80% by weight of Freon® 113 was coated on the asymmetrical pore diameter structure film in a thickness of 130 micrometres and vulcanized with hot air at 120°C for 40 minutes to prepare a composite membrane.

The gas permeation characteristics of the composite membrane were as follows:

$QO_2 \doteqdot 6.9 \times 10^{-5}$ cm³/cm²·sec·cm Hg

$\alpha \doteqdot 2.8$

The composite membrane was placed in a reaction chamber. While introducing trimethylvinylsilane at a flow rate of 0.7 cm³/min, a glow discharge was applied in the chamber at an output of 20W for 30 minutes to deposit a plasma polymerization film on the outermost layer of the composite membrane. In this way, a three-layer composite membrane was prepared. The gas permeation characteristics of the three-layer composite membrane were as follows:

$QO_2 \doteqdot 9.8 \times 10^{-7}$ cm³/cm²·sec·cm Hg

$\alpha \doteqdot 5.7$

Example 13

An asymmetrical pore diameter structure film was prepared in the same manner as in Example 4 and placed in a reaction chamber. While introducing trimethylvinylsilane at a flow rate of 0.7 cm³/min, a glow discharge was applied in the chamber at an output of 20W for 30 minutes to deposit a plasma polymerization film on the dense layer of the asymmetrical pore diameter structure film. The gas permeation characteristics of the composite membrane as prepared above were as follows:

$QO_2 \doteqdot 1.1 \times 10^{-5}$ cm³/cm²·sec·cm Hg

$\alpha \doteqdot 3.0$

Example 14

A dope solution was prepared consisting of 20% by weight of U Polymer® (U—100) and 80% by weight of N-methyl-2-pyrrolidone. This dope solution was flowed over a smooth glass plate in a thickness of 300 micrometres by means of a doctor knife. The entire glass plate was then soaked in ethanol to coagulate the dope solution. The thus formed film was peeled off, washed with water for 2 hours, and dried by blowing air at 45°C for 2 hours to prepare about a 170 micrometre thick asymmetrical pore diameter structure film.

The gas permeation characteristics of the film were as follows:

$QO_2 \doteqdot 3.2 \times 10^{-5}$ cm³/cm²·sec·cm Hg

$PO_2 \doteqdot 5.4 \times 10^{-7}$ cm³·cm/cm²·sec·cm Hg

$\alpha \doteqdot 1.3$

The film was placed in a reaction chamber. While introducing trimethylvinylsilane at a flow rate of 0.7 cm³/min, a glow discharge was applied in the chamber at an output of 20W for 30 minutes to deposit a plasma polymerization film on the dense layer of the film. In this way, a composite membrane was prepared.

The gas permeation characteristics of the composite film were as follows:

$QO_2 \doteqdot 9.8 \times 10^{-6}$ cm³/cm²·sec·cm Hg

$\alpha \doteqdot 5.0$

TABLE 1
Dope Solution

| Example | Polymer I | | Polymer II | | Solvent | |
|---|---|---|---|---|---|---|
| | Polymer | Wt% | Polymer | Wt% | Solvent | Wt% |
| 4 | A*1 | 16 | B*2 | 4 | NM2P*4 | 80 |
| 5 | B | 16 | C*3 | 4 | " | " |
| 6 | B | 10 | C | 10 | " | " |

Note:
*1 Polysulfone: Udel P—1700® (produced by U.C.C.)
*2 Aromatic polyester: U Polymer U—100 (produced by Unitika Co., Ltd.)
*3 Polycarbonate: Upilon S—2000® (produced by Mitsubishi Gas Chemical Co., Ltd.)
*4 N-Methyl-2-pyrrolidone

TABLE 2
Physical Properties of Film

| Example | Thickness | Gas Permeation Characteristics | | |
|---|---|---|---|---|
| | | $QO_2$ | $PO_2$ | α |
| | (μ) | ($cm^3/cm^2$·sec·cm Hg) | ($cm^3$·cm/$cm^2$·sec·cm Hg) | ($QO_2/QN_2$) |
| 4 | 150 | $7.7 \times 10^{-5}$ | $1.2 \times 10^{-6}$ | 1.4 |
| 5 | 160 | $1.5 \times 10^{-4}$ | $2.4 \times 10^{-6}$ | 1.2 |
| 6 | 180 | $3.6 \times 10^{-4}$ | $5.8 \times 10^{-6}$ | 1.0 |

TABLE 3*
Dope Solution

| Comparative Example | Polymer | | Solvent | |
|---|---|---|---|---|
| | Polymer | Wt% | Solvent | Wt% |
| 2 | B | 20 | NM2P | 80 |
| 3 | C | 20 | NM2P | 80 |

* The same polymer designations as in Table 1 are used.

TABLE 4
Physical Properties of Film

| Comparative Example | Thickness (μm) | Specific Gravity | Gas Permeation Characteristics | | |
|---|---|---|---|---|---|
| | | | $QO_2$ | $PO_2$ | α |
| 2 | 15 | 1.21 | $2.0 \times 10^{-7}$ | $3.0 \times 10^{-10}$ | 5.2 |
| 3 | 15 | 1.20 | $6.8 \times 10^{-8}$ | $1.0 \times 10^{-10}$ | 5.2 |

The asymmetrical pore diameter structure films obtained in the present invention are superior in heat resistance and is suitable for use in the isolation of argon from air, for the concentration of oxygen, for the concentration of hydrogen in town gas and so forth.

**Claims**

1. A gas-selectively permeable membrane comprising an asymmetrical pore diameter structure film made of an aromatic polyester having (a) a molecular weight of 10,000 to 50,000 and (b) the recurring unit represented by formula (A) or a mixture of said aromatic polyester and at least one polymer having the recurring unit represented by formula (B), wherein the mean pore diameter of a dense layer of the asymmetrical pore diameter structure film is 0.5 micrometre or less and the mean thickness of the dense layer is 10 micrometres or less:

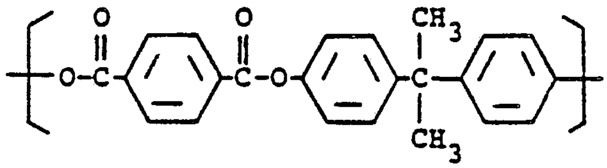
(A)

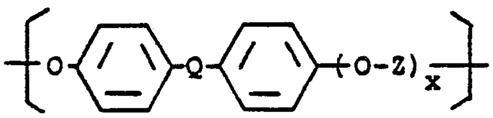
(B)

wherein x is a natural number including zero, Q is

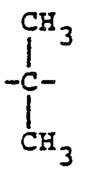 or 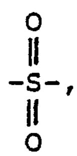 and Z is 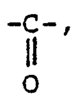 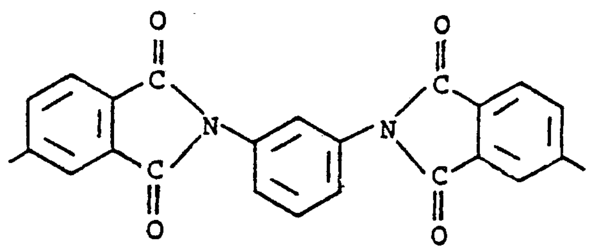 ,

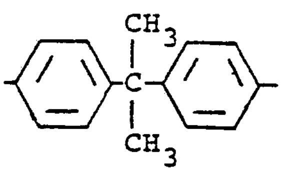 or 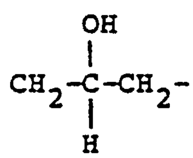

2. The gas-selectively permeable membrane as claimed in Claim 1, wherein at least one thin polymer film is further laminated on the dense layer of the asymmetrical pore diameter structure film.

3. The gas-selectively permeable membrane as claimed in Claim 1, wherein at least one thin polymer film laminated on the dense layer of the asymmetrical pore diameter structure film is a thin polymer layer prepared by coating a rubber solution.

4. The gas-selectively permeable membrane as claimed in Claim 2, wherein at least one thin polymer film laminated on the dense layer of the asymmetrical pore diameter structure film is a plasma polymerization thin layer formed by glow discharge.

5. A method of forming the gas-selectively permeable membrane as claimed in Claim 1, which comprises applying a solution containing an aromatic polyester having (a) a molecular weight of 10,000 to 50,000 and (b) the recurring unit represented by formula (A) or a mixture of said aromatic polyester and at least one polymer having the recurring unit represented by formula (B) and a solvent, to form a film, bringing the thus-formed film into contact with a coagulating agent to remove the solvent and then drying the film:

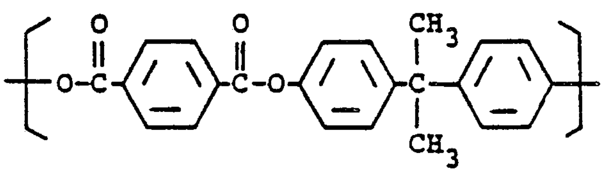
(A)

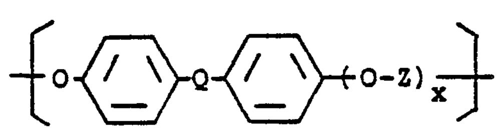
(B)

wherein x is a natural number including zero, Q is

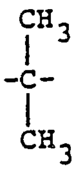 or 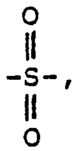, and Z is 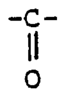, 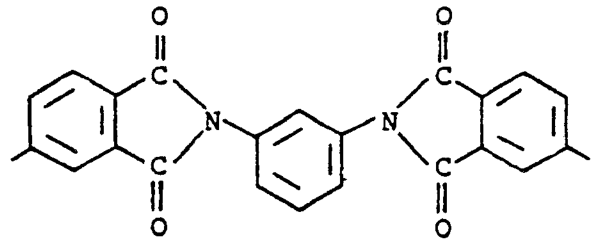,

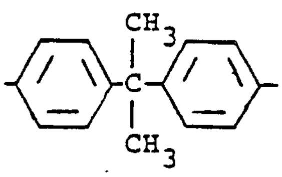 or 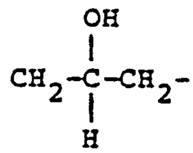

6. The method as claimed in Claim 5, wherein the solvent is N-methyl-2-pyrrolidone, N-formylpiperidine, 1-formylmorpholine, tetrahydrofuran, or a mixture comprising two or more thereof.

7. The method as claimed in Claim 5, wherein a polymer solution is coated on the dense layer of the asymmetrical pore diameter structure film and then dried to laminate a polymer thin film thereon.

8. The method as claimed in Claim 5, wherein glow discharge is applied while supplying a polymerizable monomer in an atmosphere of 0.5 torr (0.0667 Pa) or less with or without coating a polymer solution on the dense layer of the asymmetrical pore diameter structure film to deposit thereon a plasma polymerization thin film.

**Patentansprüche**

1. Eine gasselektiv durchlässige Membran, die einen strukturierten Film mit einem assymmetrischen Porendurchmesser aus einem aromatischen Polyester mit (a) einem Molekulargewicht von 10.000 bis 50.000 und (b) mit der durch die Formel (A) dargestellten, wiederkehrenden Einheit oder aus einer Mischung des aromatischen Polyesters und mindestens einem Polymer mit der durch die Formel (B) dargestellten wiederkehrenden Einheit umfaßt, wobei der durchschnittliche Porendurchmesser einer dichten Schicht des strukturierten Films mit dem assymmetrischen Porendurchmesser 0,5 µm oder weniger und die durchschnittliche Dicke der dichten Schicht 10 µm oder weniger beträgt:

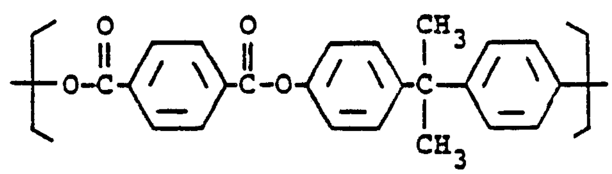 (A)

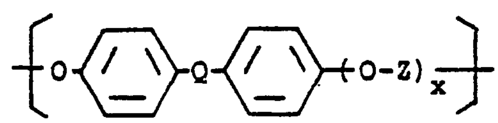 (B)

wobei x ein natürliche Zahl einschließlich 0 ist, Q

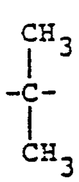 oder 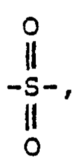, bedeutet, und Z durch 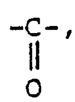, 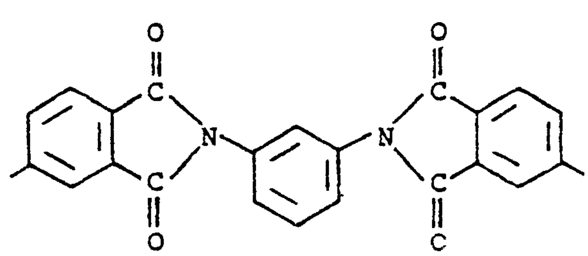,

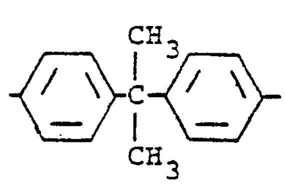 oder 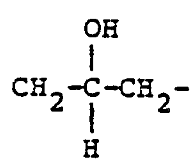

gegeben ist.

2. Gasselektiv durchlässige Membran nach Anspruch 1, wobei mindestens ein dünner Polymerfilm weiterhin auf der dichten Schicht des strukturierten Films mit dem assymmetrischen Porendurchmesser laminiert ist.

3. Gasselektiv durchlässige Membran nach Anspruch 1, wobei mindestens ein dünner Polymerfilm, der auf die dichte Schicht des strukturierten Films mit dem assymmetrischen Porendurchmesser laminiert ist, eine dünne Polymerschicht bildet, die durch Auftragen einer Kunststofflösung hergestellt wurde.

4. Gasselektiv durchlässige Membran nach Anspruch 2, wobei mindestens ein dünner Polymerfilm, der auf der dichten Schicht des strukturierten Films mit dem assymmetrischen Porendurchmesser laminiert ist, eine plasmapolymerisierte, dünne Schicht ist, die durch Glimmentladung gebildet wurd.

5. Verfahren zur Herstellung der gasselektiv durchlässigen Membran nach Anspruch 1, das das Aufbringen einer Lösung, die einen aromatischen Polyester mit (a) einem Molekulargewicht von 10.000 bis 50.000 und (b) mit der durch die Formel (A) dargestellten, wiederkehrenden Einheit oder eine Mischung des aromatischen Polyesters und mindestens eines Polymers mit der durch die Formel (B) dargestellten, wiederkehrenden Einheit und ein Lösungsmittel enthält, unter Bildung eines Filmes, das Kontaktieren des so gebildeten Filmes mit einem Koagulationsmittel zur Entfernung des Lösungsmittels und anschließend das Trocknen des Filmes umfaßt:

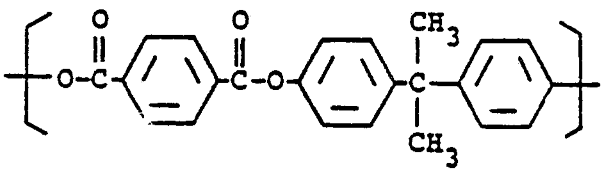 (A)

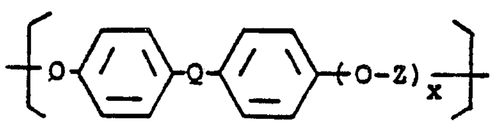 (B)

wobei x eine natürliche Zahl einschließlich 0 darstellt, Q durch

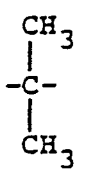 oder 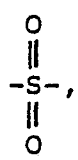, und Z durch 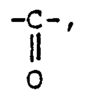, 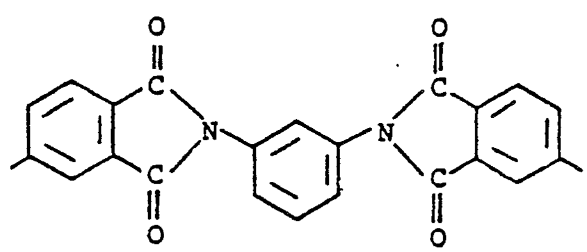,

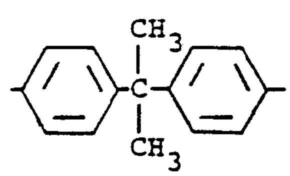 oder 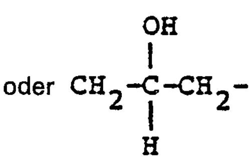

gegeben ist.

6. Verfahren nach Anspruch 5, wobei das Lösungsmittel N-methyl-2-pyrrolidon, N-formylpiperidin, 1-Formylmorpholin, Tetrahydrofuran oder eine Mischung, die zwei oder mehr dieser Lösungsmittel umfaßt, ist.

7. Verfahren nach Anspruch 5, wobei eine Polymerlösung auf die dichte Schicht des strukturierten Films mit dem assymmetrischen Porendurchmesser aufgetragen wird und dann getrocknet wird, um darauf einen dünnen Polymerfilm zu laminieren.

8. Verfahren nach Anspruch 5, wobei die Glimmentladung eingesetzt wird, während ein polymerisierbares Monomer in eine Atmosphäre von 0,5 Torr (0,0667 Pa) oder weniger gebracht wird, mit oder ohne Auftragen einer Polymerlösung auf die dichte Schicht des strukturierten Films mit dem assymmetrischen Porendurchmesser, um darauf einen dünnen, plasmapolymerisierten Film abzuscheiden.

**Revendications**

1. Une membrane à perméabilité sélective aux gaz comprenant un film à distribution asymétrique des diamètres de pores fait d'un polyester aromatique ayant (a) un poids moléculaire de 10 000 à 50 000 et (b)

le motif récurrent représenté par la formule (A) ou d'un mélange dudit polyester aromatique et d'au moins un polymère ayant le motif récurrent représenté par la formule (B), dans laquelle le diamètre moyen de pores d'une couche dense du film à distribution asymétrique des diamètres de pores est de 0,5 μm ou moins et l'épaisseur moyenne de la couche dense est de 10 μm ou moins:

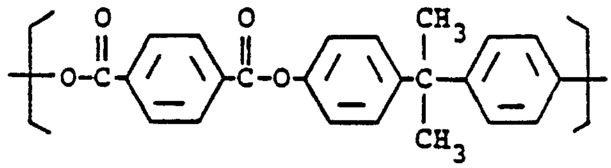 (A)

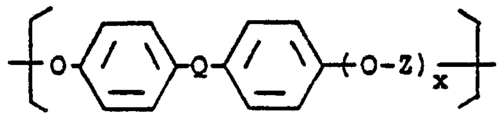 (B)

où x est un entier naturel y compris zéro, Q est

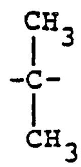 ou 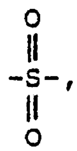, et Z est 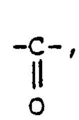, 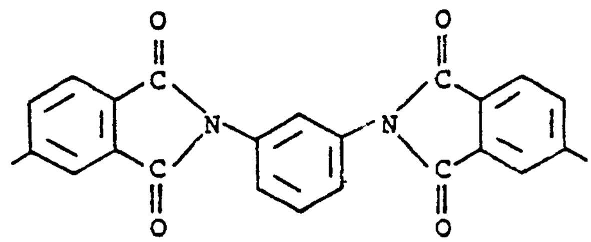,

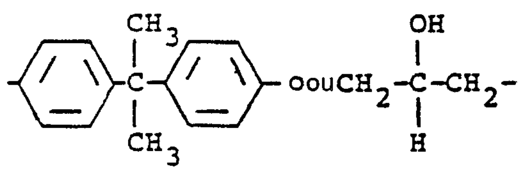

2. La membrane à perméabilité sélective aux gaz selon la revendication 1, dans laquelle au moins un film mince de polymère est encore stratifié sur la couche dense du film à distribution asymétrique des diamètres de pores.

3. La membrane à perméabilité sélective aux gaz selon la revendication 1, selon laquelle au moins un film mince de polymère stratifié sur la couche dense du film à distribution asymétrique des diamètres de pores est une couche mince de polymère préparée par application d'une solution de caoutchouc.

4. La membrane à perméabilité sélective au gaz selon la revendication 2, dans laquelle au moins un film mince de polymère stratifié sur la couche dense du film à distribution asymétrique des diamètres de pores est une couche mince de polymérisation par le plasma formée par décharge luminescente.

5. Un procédé pour la production de la membrane à perméabilité sélective aux gaz selon la revendication 1, qui consiste à appliquer une solution contenant un polyester aromatique ayant (a) un poids moléculaire de 10 000 à 50 000 et (b) le motif récurrent représenté par la formule (A) ou un mélange dudit polyester aromatique et au moins un polymère ayant le motif récurrent représenté par la formule (B) et un solvant, pour former un film, à mettre le film ainsi formé en contact avec un agent coagulant pour séparer le solvant et ensuite à sécher le film:

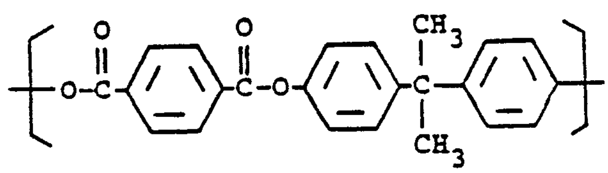 (A)

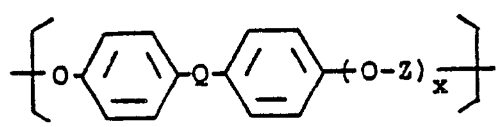 (B)

où x est un entier naturel y compris zéro, Q est

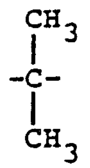 ou 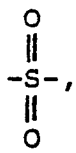, et Z est 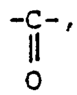, 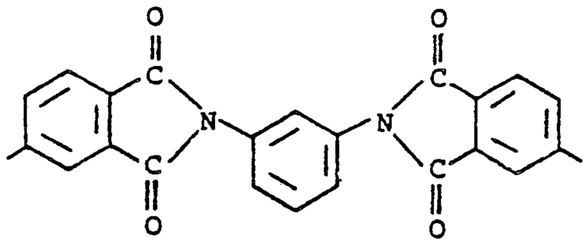,

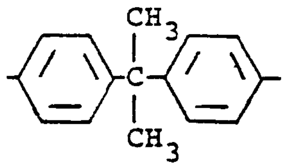 ou 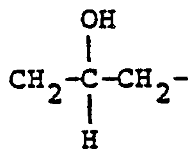

6. Le procédé selon la revendication 5 dans lequel le solvant est la N-méthyl-2-pyrrolidone, la N-formylpipéridine, la 1-formylmorpholine, le tétrahydrofuranne ou un mélange de deux ou plusieurs d'entre eux.

7. Le procédé selon la revendication 5 dans lequel une solution de polymère est appliquée sur la couche dense du film à distribution asymétrique des diamètres de pores et ensuite séchée pour stratifier sur celui-ci un film mince de polymère.

8. Le procédé selon la revendication 5 dans lequel on applique une décharge luminescente tout en fournissant un monomère polymérisable dans une atmosphère sous 0,5 mm Hg (0,0667 Pa) ou moins avec ou sans application d'une solution de polymère sur la couche dense du film à distribution asymétrique des diamètres de pores pour déposer sur celui-ci un film mince de polymérisation par le plasma.

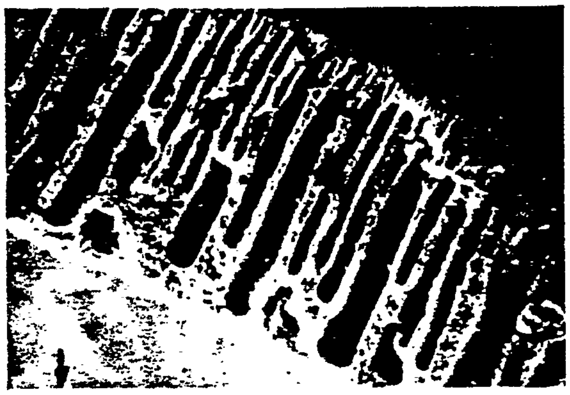

X 400

FIG. 1–a

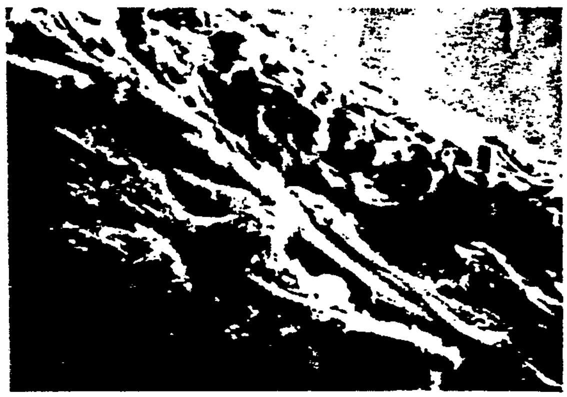

X. 400

FIG.1–b

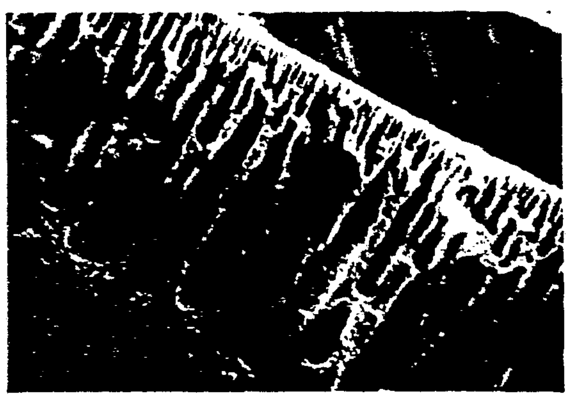

X 400

FIG. 1–c

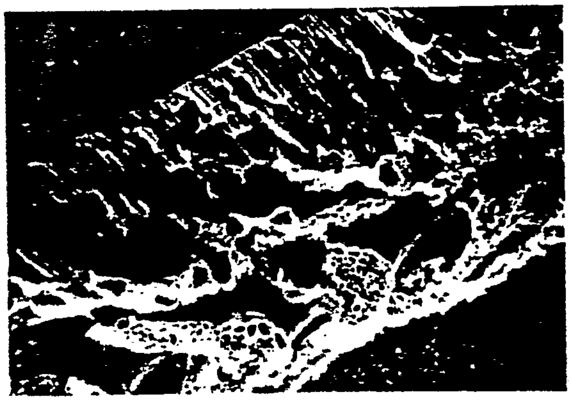

X 400

FIG. 2

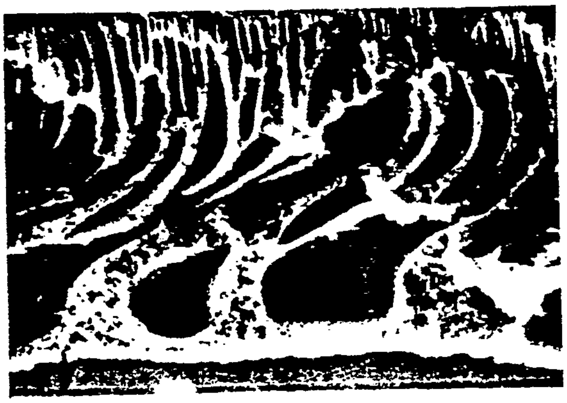

X 1000

FIG. 3